(19) Europäisches Patentamt
European Patent Office
Office européen des brevets

(11) Veröffentlichungsnummer: **0 053 220 B1**

# (12) EUROPÄISCHE PATENTSCHRIFT

(45) Veröffentlichungstag der Patentschrift: **04.01.84**

(51) Int. Cl.³: **C 09 B 67/24**, C 09 B 67/54, C 09 B 69/04

(21) Anmeldenummer: **81103377.8**

(22) Anmeldetag: **05.05.81**

(54) **Verfahren zur Herstellung elektrolytarmer sulfonsäuregruppenhaltiger Verbindungen.**

(30) Priorität: **02.12.80 DE 3045377**

(43) Veröffentlichungstag der Anmeldung: **09.06.82 Patentblatt 82/23**

(45) Bekanntmachung des Hinweises auf die Patenterteilung: **04.01.84 Patentblatt 84/1**

(84) Benannte Vertragsstaaten: **BE CH DE FR GB IT LI**

(56) Entgegenhaltungen:
**EP - A - 0 021 619**
**DE - A - 2 158 059**
**FR - A - 2 132 680**

**CHEMICAL ABSTRACTS, Band 86, Nr. 26, 27- Juni 1977, Zusammenfassung Nr. 191321p, Seite 60 COLUMBUS OHIO (US)**
**ANALYTICA CHIMICA ACTA, band 113, Nr. 2, 1980, Elsevier Scientific Publishing Company, AMSTERDAM (NL) M. PUTTEMANS et al.: "Extraction of water-soluble *acid dyes by ion-pair formation with TRI-n-Octylamine*", Seiten 307-314**

(73) Patentinhaber: **BASF Aktiengesellschaft, Carl-Bosch-Strasse 38, D-6700 Ludwigshafen (DE)**

(72) Erfinder: **Weberndoerfer, Volksmar, Dr., Feldbergstrasse 48, D-6800 Mannheim (DE)**
Erfinder: **Brunnmueller, Fritz, Dr., Leopoldstrasse 19, D-6700 Ludwigshafen (DE)**
Erfinder: **Eisert, Manfred, Dr., Berner Weg 26, D-6700 Ludwigshafen (DE)**
Erfinder: **Bermes, Rudolf, Dr., Pilgerstrasse 29, D-6700 Ludwigshafen (DE)**

EP 0 053 220 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung elektrolytarmer sulfonsäuregruppenhaltiger Verbindungen

Die Erfindung betrifft ein Verfahren zur Herstellung von elektrolytarmen sulfonsäuregruppenhaltigen Farbstoffen, optischen Aufhellern oder von deren sulfonsäuregruppenhaltigen Vorprodukten, das dadurch gekennzeichnet ist, dass man gegebenenfalls anorganische Salze enthaltende wässrige Lösungen oder Suspensionen der sulfonsäuregruppenhaltigen Verbindungen bei erhöhter Temperatur

a) mit einer den Sulfogruppen in diesen Verbindungen äquivalenten Menge eines nicht emulgierend wirkenden, wasserunlöslichen Amins mit insgesamt 12 bis 40 Kohlenstoffatomen, das mit den sulfonsäuregruppenhaltigen Verbindungen ein genügend lipophiles Salz bildet, so dass es sich von der wässrigen Phase trennt, versetzt

b) mit Säuren einen pH-Wert <5 einstellt, intensiv mischt,

c) die zwei entstehenden Phasen verschiedener Dichte trennt,

d) die aus dem lipophilen Ammoniumsalz der Verbindungen bestehende Phase, gegebenenfalls nach dem Waschen mit Wasser, mit einer wasserlöslichen Base, deren sulfonsaures Salz hergestellt werden soll, und Wasser versetzt, die entstehenden Phasen trennt und das Salz in der wässrigen Lösung belässt oder es daraus isoliert.

Das erfindungsgemässe Verfahren eignet sich somit insbesondere zur Abtrennung der sulfonsäuregruppenhaltigen Farbstoffe von Säuren und gegebenenfalls Salzen, insbesondere den Säuren und Salzen, die bei der Synthese der sulfonsäuregruppenhaltigen Farbstoffe anwesend sind oder dabei anfallen.

Es war sehr überraschend, dass es gelang, mit dem erfindungsgemässen Verfahren eine einfache, wirtschaftliche und umweltfreundliche, für den technischen Massstab geeignete Arbeitsweise zu entwickeln.

Überraschend war vor allem, dass bei erhöhter Temperatur stöchiometrische Mengen wasserunlöslicher Amine ohne Emulgierwirkung aus einer säure- und gegebenenfalls salzhaltigen Mischung mit hoher Selektivität nur den sulfonsäuregruppenhaltigen Farbstoff binden, und dass sich das dabei entstehende vorzugsweise flüssige Salz von der wässrigen Phase abtrennt. Das neue Verfahren benötigt als regenerierbaren, also weder die Umwelt noch die Kosten belastenden Hilfsstoff nur das Amin.

Das erfindungsgemässe Verfahren wird, beispielsweise folgendermassen ausgeführt:

Zur Lösung oder Suspension des sulfonsäuregruppenhaltigen Farbstoffes gibt man bei erhöhter Temperatur eine bezogen auf die Sulfogruppen des Farbstoffs äquivalente (stöchiometrische) Menge eines wasserunlöslichen Amins. Anschliessend stellt man mit einer Säure einen pH-Wert <5, vorzugsweise <3 ein. Nach intensivem Mischen bilden sich zwei Phasen, eine wässrige Phase und eine fremdsalzarme Phase des Salzes des organischen Amins mit dem sulfonsäuregruppenhaltigen Farbstoff. Die wässrige Phase wird abgetrennt. Die organische Phase wird zweckmässig mit Wasser, gegebenenfalls mehrmals, gewaschen, um Reste anorganischer Verbindungen abzutrennen.

Aus der organischen Phase kann man ohne Schwierigkeiten das Amin mit einer äquivalenten oder grösseren Menge (25% Überschuss) eines wasserlöslichen Amins, dessen sulfonsaures Salz hergestellt werden soll, unter Zusatz von Wasser wieder in Freiheit setzen. Man erhält so, unter Wiedergewinnung des wasserunlöslichen Amins, eine konzentrierte wässrige Lösung des gewünschten Sulfonsäuresalzes des Farbstoffes. Das wasserunlösliche Amin steht für einen erneuten Einsatz zur Verfügung. Auch die Waschwässer können beim nächsten Aufarbeitungszyklus wieder eingesetzt werden. Anstelle von wasserlöslichen Aminen können natürlich auch andere Basen, wie Alkalihydroxide, verwendet werden.

Als wasserunlösliche Amine ohne emulgierende Wirkung, die mit den sulfonsäuregruppenhaltigen Farbstoffen ein genügend lipophiles flüssiges Salz bilden, dass dieses sich spontan von der wässrigen Phase trennt, kommen wasserunlösliche homo- und heterocyclische aliphatische, aromatische, araliphatische und vorzugsweise offenkettige verzweigte oder unverzweigte aliphatische Amine mit insgesamt 12 bis 40, vorzugsweise 16 bis 36 Kohlenstoffatomen in Betracht, wobei vorzugsweise tertiäre und sekundäre Amine einzusetzen sind. Als Beispiele seien erwähnt:

Tri-n-octyl-, Tri-2-äthylhexyl-, Tribenzyl-, Methyldioctyl-, Methyldidecyl-, Tridodecyl-, Tributyl-, Di-2-äthylhexyl-, Didecyl-amin oder N,N-Dibutylanilin. Die meisten primären Amine mit 12 bis 40 Kohlenstoffatomen sind wegen ihrer Emulgierwirkung weniger geeignet. Brauchbar sind jedoch primäre Amine der Strukturformel

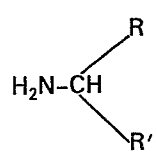 ,

wenn R und R′ zusammen 11 bis 39 C-Atome und vergleichbare Kettenlängen besitzen.

Als Basen für die Überführung der Sulfonsäure aus der organischen zurück in die Wasserphase und gleichzeitig in das zumeist als Endprodukt gewünschte wasserlösliche Salz sind vor allem wasserlösliche, aliphatische, nicht emulgierend wirkende Amine und insbesondere Alkanolamine geeignet. Solche Amine sind beispielsweise Methyl-, Äthyl, Propyl-, Butyl- und vorzugsweise 2-Hydroxyäthyl-(= Äthanol-) oder 2-Hydroxypropyl-amin, wobei die Substituenten jeweils ein-,

zwei- oder (ausser Äthyl, Propyl und Butyl) dreifach (primäres, sekundäres oder tertiäres Amin) oder auch verschiedene der Substituenten gemischt vorhanden sein können. Triäthylamin und seine höheren Homologen sind normalerweise schon zu schwach wasserlöslich. Andererseits ist Monoamylamin noch brauchbar. Trotz ihrer vergleichsweise geringen Basizität sind insbesondere Alkanolamine zur Überführung von Sulfonaten in die wässrige Phase geeignet.

Wenn bei den Aminen und deren Sulfonaten von der Löslichkeit oder Unlöslichkeit in Wasser bzw. von der zur Trennung von der wässrigen Phase ausreichenden Lipophilie die Rede ist, so ist dabei stets an eine für praktische Zwecke im Sinne der Erfindung ausreichende Löslichkeit oder Unlöslichkeit bzw. Trennfähigkeit gedacht. Verluste bzw. Verunreinigungen von wenigen Prozent, die auf einer nicht 100%igen Unlöslichkeit beruhen, können je nach Umständen in Kauf genommen oder durch Wiederholung der Trennoperation minimiert werden.

Das erfindungsgemässe Verfahren wird bei erhöhter Temperatur, d.h. ungefähr zwischen 50 und 130°C, vorzugsweise 60 bis 105°C durchgeführt und kann ohne weiteres den Gegebenheiten des spezifischen Problems angepasst werden. Ist die organische Phase viskos, so empfiehlt es sich, bei höherer Temperatur zu arbeiten, um die Trennzeit der Phasen zu verkürzen.

Das Amin mit 12 bis 40 C-Atomen sollte möglichst genau stöchiometrisch zur vorhandenen Sulfonsäure eingesetzt werden, da ein Amin-Überschuss Säure in die organische Phase einschleppt, wenn es sich um Amine mit mehr als 16 C-Atomen handelt. Enthalten die Farbstoffe mehr als eine Sulfogruppe, so kann auch mit einem geringen Unterschuss an Amin gearbeitet werden.

Die wasserlösliche Base kann in stöchiometrischer Menge oder einem Überschuss, beispielsweise bis zu 25%, eingesetzt werden, ein Unterschuss würde die Ausbeute verschlechtern, und ein Überschuss stört nur, wenn er als Verunreinigung im gewünschten Produkt unerwünscht ist.

Die Endprodukte können entweder in wässriger Lösung belassen oder durch bekannte Methoden, z.B. Eindampfen oder Kristallisation und Dekantieren oder Abfiltrieren isoliert werden.

Das erfindungsgemässe Verfahren ist ausgezeichnet zur Isolierung sulfonsäuregruppenhaltiger Farbstoffe und optischer Aufheller geeignet, die z.B. durch Sulfierung gewonnen wurden, weiterhin zur Isolierung von Farbstoffen aus z.B. bei der Azokupplung oder Kondensationsreaktionen entstehenden Reaktionsgemischen. Azokupplungsreaktionsgemische enthalten in der Regel schon Säure und Salz, gegebenenfalls müssen sie, wie alkalische Kondensationsgemische auf einen pH-Wert <5 gebracht werden.

Als Säure zur Einstellung des pH-Wertes <5 eignen sich z.B. Mineralsäuren oder Ameisensäure.

Sulfonsäuregruppenhaltige Farbstoffe und optische Aufheller sind beispielsweise Farbstoffe aus der Reihe der Azo-, Stilbenazo-, Stilbenazoxy-, Anthrachinon- und Phthalocyaninfarbstoffe sowie optische Aufheller aus der Reihe der Bistriazinyl-aminostilbendisulfosäuren, besonders solche der Formel

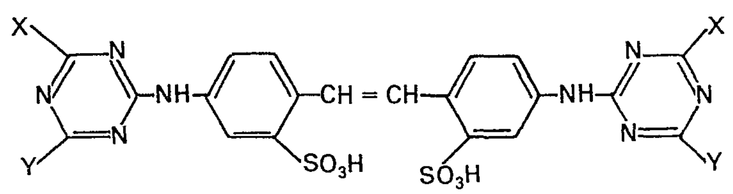

worin X und Y für gegebenenfalls substituierte Alkoxy- oder Aminogruppen stehen, die in grosser Zahl in der Literatur beschrieben sind.

Die bei der Abtrennung gewonnenen lipophilen Ammoniumsalze der sulfonsäuregruppenhaltigen Verbindungen können bei geeigneter Wahl des Kations, das im wesentlichen die Löslichkeit bestimmt, in sehr hochkonzentrierte wässrige Lösungen überführt werden, die sich ausgezeichnet als Flüssigeinstellungen eignen. Technisch bedeutsam ist das vor allem für Farbstoffe und optische Aufheller, die bei der üblichen Anwesenheit anorganischer Salze nur niedrigkonzentrierte Lösungen ergeben und sich somit nicht in handelsfähige Flüssigeinstellungen überführen lassen. Flüssigeinstellungen sulfonsäuregruppenhaltiger Farbstoffe werden z.B. von der Textilindustrie und insbesondere der Papierindustrie gewünscht, um die mit Pulverfarbstoffen verknüpften Nachteile zu vermeiden.

Anstelle der sulfonsäuregruppenhaltigen Farbstoffe oder optischen Aufheller kann man natürlich auch deren sulfonsäuregruppenhaltige Vorprodukte nach dem erfindungsgemässen Verfahren elektrolytarm herstellen und diese dann weiter zu den Farbstoffen umsetzen. Diese Verfahrensvariante kommt insbesondere dann in Betracht, wenn bei der eigentlichen Farbstoffherstellung keine Elektrolyte, d.h. Salze mehr eingeschleppt werden.

Die in den Beispielen genannten Teile und Prozente beziehen sich auf das Gewicht.

Beispiel 1

70 Teile 4 Nitrotoluol-2-sulfonsäure in Form eines 77%igen feuchten Presskuchens,

400,0 Teile Wasser und

102,0 Teile Natronlauge (50%ig) werden 5 Stunden bei 55 bis 58°C gerührt. Dann kühlt man ab auf Raumtemperatur und setzt

186,0 g Teile Schwefelsäure (50%ig) und

60,0 Teile Tributylamin zu. Das Reaktionsgemisch wird auf 100°C erwärmt und 15 Minuten bei dieser Temperatur gerührt. Stellt man den Rührer ab, so

scheidet sich das flüssige Tributylammoniumsalz des Farbstoffes nach oben ab. Die untere, wässrige Phase wird abgelassen und verworfen.

Nach Zugabe von 200,0 Teilen Wasser und 42,0 Teilen Diethanolamin wird eine Stunde bei 60°C gerührt. Dann wird abgekühlt. Man erhält wieder zwei Phasen: unten den Flüssigfarbstoff und darüber farbloses Tributylamin. Der Flüssigfarbstoff wird abgelassen und mit wenig Schwefelsäure neutralisiert. Man erhält 360 Teile einer stabilen Lösung von C.I. Direct Yellow 11. 54,0 Teile Tributylamin werden zurückerhalten.

Beispiel 2
Orange II, Diethanolamin-Salz, CI Acid Orange 7, C.I. 15510

Durch Kupplung von diazotierter Sulfanilsäure auf β-Naphtol wurde in üblicher Weise eine Mischung hergestellt, die 16,4 Teile Orange II (gerechnet als freie Säure) neben synthesebedingten Salzen in 150 Teilen Wasser enthielt. Diese Mischung wurde mit 11,9 Teilen Di-2-ethylhexylamin versetzt und unter guter Rührung durch Zusatz von Schwefelsäure auf pH 1,5 gebracht. Nach weiterem 10-minütigem Rühren bei 80° wurde bei dieser Temperatur absitzen gelassen. Die Phasentrennung ergab eine fast farblose, wässrige Oberphase, die verworfen wurde, und eine tiefgefärbte, ölige Unterphase, die hauptsächlich aus dem Amin-Salz der Farbstoffsäure bestand. Die Behandlung der Unterphase mit 6,6 Teilen Diethanolamin und 40 Teilen Wasser während 15 Minuten bei 80°C führte zu einer Verdrängung des Di-2-ethylhexylamins aus dem Farbsalz. Es wurden 11,6 Teile (97,1% der eingesetzten Menge) als Oberphase abgetrennt. 61,7 Teile bildeten die Unterphase, welche praktisch den gesamten Farbstoff als Diethanolaminsalz in 31,7%iger wässriger Lösung enthielt.

Beispiel 3
Orange RO, Monoethanolaminsalz (C.I. Acid Orange 8), C.I. 15575

Durch Kupplung von diazotierter 1-Amino-2-methyl-4-benzolsulfonsäure auf β-Naphtol wurde in üblicher Weise ein Gemisch hergestellt, welches neben anorganischen Salzen 34,2 Teile Orange RO (gerechnet als freie Sulfosäure) in 140 Teilen der wässrigen Mischung enthielt. Nach dem Versetzen mit 26,5 Teilen Methyl-di-2-ethylhexylamin wurde bei 80°C unter guter Rührung mit soviel Schwefelsäure versetzt, dass ein pH-Wert von 1,8 erreicht wurde. Nach weiterem 10-minütigem Rühren wurde die Mischung bis zur Ausbildung der Phasentrennung belassen. Die obere wässrige Phase, welche praktisch keinen Farbstoff mehr enthielt, wurde verworfen, die untere, welche aus dem Farbsalz des Methyl-di-2-ethylhexylamins bestand, wurde bei 80°C nochmals mit 100 Teilen Wasser gewaschen, dann mit 7,5 Teilen Monoethanolamin in 100 Teilen Wasser bei 80°C gut gerührt und wiederum bis zur Phasentrennung bei der gleichen Temperatur gehalten. Die Phasentrennung ergab eine obere Phase (24,9 Teile, 93,9% der Theorie), welche aus Methyl-di-2-ethyl-hexylamin bestand, und eine untere Phase (146,1 Teile), die praktisch den gesamten Farbstoff als 27,5%ige wässrige Lösung enthielt.

Beispiel 4
Durch Kupplung von diazotierter 4-Amino-azobenzol-4'-sulfonsäure auf I-Säure wurde in üblicher Weise ein Gemisch hergestellt, welches 13,2 Teile Farbstoff (gerechnet als freie Säure) in 210 Teilen der wässrigen Mischung enthielt. Diese Mischung wurde mit 11,9 Teilen Di-2-ethylhexylamin versetzt.

Unter gutem Rühren wurde der pH-Wert mit 30%iger Schwefelsäure auf 3 gebracht und bei 70°C getrennt. Die Wasserphase wurde verworfen, die organische Phase mit 10,3 Teilen Triethanolamin in 60 Teilen Wasser innig gemischt. Nach der Phasentrennung bei 30°C erhielt man eine organische Phase, welche nur noch ganz schwach gefärbt war (11,7 Teile Amin = 98,3% der Theorie), und eine wässrige Lösung des Triethanolammoniumsalzes der Farbstoffsäure (146 Teile).

Beispiel 5

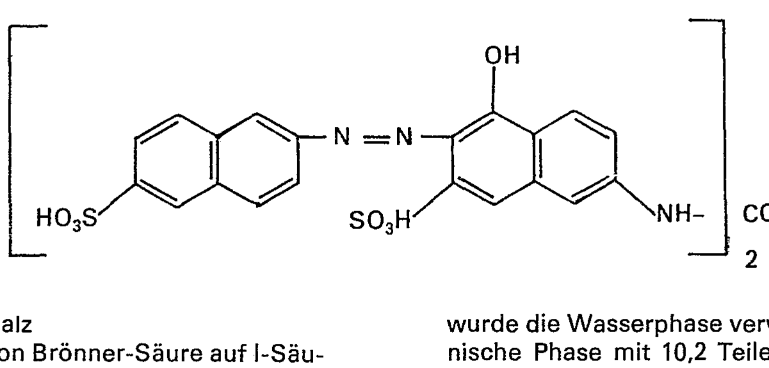

Monoethanolamin-Salz

Durch Kupplung von Brönner-Säure auf I-Säure-Harnstoff wurde in üblicher Weise eine Mischung hergestellt, welche 30,2 g des obigen Farbstoffs, 150 g Wasser und – synthesebedingt – anorganische Salze enthielt. Diese Mischung wurde mit 29,4 Teilen Di-2-ethylhexylamin bei 60°C innig gemischt, wobei mit $H_2SO_4$ der pH auf 2,5 eingestellt wurde. Nach der Phasentrennung wurde die Wasserphase verworfen und die organische Phase mit 10,2 Teilen Monoethanolamin und 200 Teilen Wasser bei 60°C innig gemischt. Nach erneuter Phasentrennung erhielt man eine organische Phase, welche aus der Gesamtmenge des Di-2-ethylhexylamins bestand, und eine wässrige Phase (248 Teile), die das Farbstoffsalz des Monoethanolamins in praktisch quantitativer Ausbeute enthielt.

Beispiel 6
116 Teile 4-Nitrotoluol-2-sulfonsäure in Form eines feuchten, 77%igen Presskuchens, 840 Teile Wasser und 330 Teile einer 30%igen Natronlauge werden zwei Stunden auf 75°C erwärmt. Dann setzt man eine Lösung von 20 Teilen Natriumsulfid (60%ig) in 110 Teilen Wasser zu und rührt noch eine Stunde bei 75°C. Nach Zugabe von 300 Teilen einer 50%igen Schwefelsäure, 30 Teilen Natriumsulfat und 100 Teilen Tributylamin rührt man 30 Minuten bei 100°C und lässt dann abkühlen. Die wässrige Phase wird abdekantiert, der Rückstand wird mit Wasser gewaschen. Man fügt 400 Teile Wasser und 70 Teile Diethanolamin zu, erwärmt 30 Minuten auf 100°C und kühlt wieder ab. Der Flüssigfarbstoff, der die untere Phase bildet, wird abgelassen. Das Tributylamin, das sich oben abscheidet, wird zurückgewonnen.

Man erhält 615 Teile eines stabilen Flüssigfarbstoffs, der Papier in orangefarbenem Ton färbt.

Beispiel 7
70 Teile C.I. Direct Blue 86 werden in Form eines feuchten, 34%igen Presskuchens mit 300 Teilen Wasser und 46 Teilen Tributylamin versetzt und auf 60°C erwärmt. Man stellt durch Zugabe von verdünnter Schwefelsäure einen pH von 2 ein und rührt 30 Minuten bei 100°C. Anschliessend lässt man abkühlen auf 50°C. Man giesst die wässrige Phase ab, wäscht mit Wasser, fügt 35 Teile Diethanolamin und 250 Teile Wasser zu und erwärmt 30 Minuten auf 100°C. Dann lässt man abkühlen auf Raumtemperatur. Der Flüssigfarbstoff, der die untere Phase bildet, wird abgelassen. Das sich oben abtrennende Tributylamin wird zurückgewonnen. Tributylaminreste werden aus der Farbstofflösung durch kurzes Andestillieren entfernt. Man erhält 352 Teile eines Flüssigfarbstoffs von guter Löslichkeit und Stabilität.

Beispiel 8
228 Teile Sulfiergemisch mit einem Gehalt von 44 Teilen monosulfiertem Naphthochinophthalon (C.I. 47035) werden in 910 Teile Wasser eingerührt und nach Zusatz von 54 Teilen Di-2-ethylhexylamin 15 Minuten lang bei 90 bis 95°C kräftig gerührt. Man lässt absitzen und trennt bei ca. 75 bis 80°C die untere Phase ab, die im wesentlichen aus verdünnter Schwefelsäure besteht. Die Farbstoffphase wird anschliessend mit 500 Teilen Wasser erneut heiss verrührt, wobei die wässrige Phase durch Zusatz von etwa 19 Teilen einer 25%igen Ammoniaklösung auf einen pH-Wert von ungefähr 4 bis 5 gebracht wird. Nach dem Absitzenlassen trennt man die wässrige Phase ab.

Zur Farbstoffphase setzt man nun in der Hitze 20 Teile Dimethylethanolamin, 100 Teile Wasser, 40 Teile N-Methyl-pyrrolidon und 40 Teile Harnstoff zu. Es bildet sich eine konzentrierte Farbstofflösung als untere Phase, auf der sich das zu Anfang eingesetzte Di-2-ethylhexylamin als leichtere und nahezu farblose Schicht abscheidet. Man lässt absitzen und erkalten und trennt die beiden Flüssigkeiten voneinander. Man erhält 261 Teile einer lagerbeständigen, konzentrierten und gebrauchsfertigen Lösung des Farbstoffs C.I. 47035. Von dem eingesetzten Di-2-ethylhexylamin werden 50 Teile zurückgewonnen.

Verwendet man anstelle des Dimethylethanolamins äquivalente Mengen anderer Alkanolamine, z.B. Diethylethanolamin oder Methylethanolamin, so erhält man Farbstofflösungen mit ähnlich guten Eigenschaften.

Beispiel 9
97 Teile des Farbstoffs der Formel

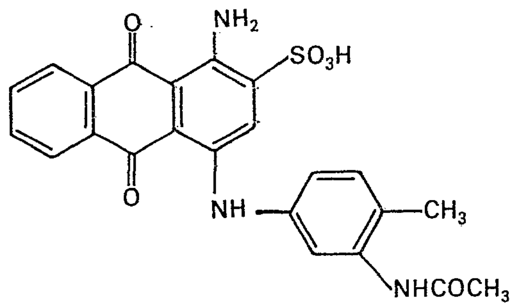

500 Teile Wasser, 25 Teile einer 50%igen Schwefelsäure und 37 Teile Tributylamin werden kurz auf 90°C erwärmt. Man lässt auf 60°C abkühlen, saugt ab und wäscht mit Wasser. Der feuchte Presskuchen wird mit 200 Teilen Wasser und 55 Teilen Triisopropanolamin versetzt und auf 100°C erwärmt. Das sich abscheidende Tributylamin destilliert dabei ab.

Nach Entfernung des Tributylamins lässt man abkühlen auf Raumtemperatur und verdünnt mit 150 Teilen N-Methylpyrrolidon. Man erhält 510 Teile einer Flüssigeinstellung des Farbstoffes.

**Patentansprüche**

1. Verfahren zur Herstellung elektrolytarmer sulfonsäuregruppenhaltiger Farbstoffe, optischer Aufheller oder von deren sulfonsäuregruppenhaltigen Vorprodukten, dadurch gekennzeichnet, dass man gegebenenfalls anorganische Salze enthaltende wässrige Lösungen oder Suspensionen der sulfonsäuregruppenhaltigen Verbindungen bei erhöhter Temperatur

a) mit einer den Sulfogruppen in diesen Verbindungen ungefähr äquivalenten Menge eines nicht emulgierend wirkenden, wasserunlöslichen Amins mit insgesamt 12 bis 40 Kohlenstoffatomen, das mit den sulfonsäuregruppenhaltigen Verbindungen ein genügend lipophiles Salz bildet, so dass es sich von der wässrigen Phase trennt, versetzt

b) mit Säuren einen pH-Wert $<5$ einstellt, intensiv mischt,

c) die zwei entstehenden Phasen verschiedener Dichte trennt,

d) die aus dem liphophilen Ammoniumsalz der Verbindungen bestehende Phase, gegebenenfalls nach dem Waschen mit Wasser, mit einer wasserlöslichen Base, deren sulfonsaures Salz hergestellt werden soll, und Wasser versetzt, die

entstehenden Phasen trennt und das Salz in der wässrigen Lösung belässt oder es daraus isoliert.

2. Verfahren gemäss Anspruch 1, dadurch gekennzeichnet, dass man als Säure Mineralsäuren oder Ameisensäure verwendet.

3. Verfahren gemäss den Ansprüchen 1 oder 2, dadurch gekennzeichnet, dass man auf einen pH-Wert von 3 einstellt.

4. Verfahren gemäss Anspruch 1, dadurch gekennzeichnet, dass man als Amine gemäss a) sekundäre oder tertiäre Amine verwendet.

5. Verfahren gemäss Anspruch 1, dadurch gekennzeichnet, dass man als Basen gemäss d) wasserlösliche Amine verwendet.

6. Verfahren gemäss Anspruch 1 und 5, dadurch gekennzeichnet, dass man als wasserlösliche Amine Alkanolamine verwendet.

7. Verwendung der gemäss Anspruch 1 hergestellten Verbindungen gegebenenfalls in Form ihrer Lösungen zum Färben von Textilmaterial, Leder oder Papierstoffen.

**Claims**

1. A process for the preparation of dyes which contain sulfonic acid groups and have a low electrolyte content, optical brighteners or their intermediates containing sulfonic acid groups, wherein an aqueous solution or suspension, which may or may not contain inorganic salts, of the compound containing sulfonic acid groups is

a) mixed, at elevated temperature, with an amount, approximately equivalent to the sulfo groups of this compound, of a non-emulsifying, water-insoluble amine of a total of 12 to 40 carbon atoms, which forms, with the compound containing sulfonic acid groups, a salt which is sufficiently lipophilic that it separates from the aqueous phase,

b) the pH is brought to $<5$ with an acid and the batch is mixed thoroughly,

c) the two resulting phases of different density are separated, and

d) the phase which consists of the lipophilic ammonium salt of the compound is mixed, with or without prior washing with water, with a water-soluble base whose sulfonate salt is to be prepared, and with water, the resulting phases are separated, and the salt is left in the aqueous solution or is isolated therefrom.

2. A process as claimed in claim 1, wherein the acid used is an inorganic acid, or formic acid.

3. A process as claimed in claim 1 or 2, wherein the pH is brought to $<3$.

4. A process as claimed in claim 1, wherein a secondary or tertiary amine is used as the amine in stage a).

5. A process as claimed in claim 1, wherein a water-soluble amine is used as the base in stage d).

6. A process as claimed in claim 1 or 5, wherein an alkanolamine is used as the water-soluble amine.

7. The use of the compounds prepared as claimed in claim 1 as such or in the form of their solutions for dyeing textile material, leather or paper stock.

**Revendications**

1. Procédé de préparation de colorants à groupes acide sulfonique pauvres en électrolytes, d'azurants optiques ou de leurs précurseurs à groupes acide sulfonique, caracterisé en ce que l'on soumet des solutions ou suspensions aqueuse des composés à groupes acide sulfonique, qui peuvent éventuellement contenir des sels inorganiques, à température accrue, aux opérations ci-après:

a) on y ajoute en agitant une proportion approximativement équivalente aux groupes sulfo de ces composés d'une amine insoluble dans l'eau avec un total de 12 à 40 atomes de carbone, qui ne possède pas une action émulsionnante, mais forme avec les composés à groupes acide sulfonique un sel suffisamment lipophile pour en provoquer la séparation de la phase aqueuse;

b) on ajuste avec des acides un pH inférieur à 5 et on agite vigoureusement;

c) on sépare les deux phases aux densités différentes;

d) à la phase comprenant le sel d'ammonium lipophile des composés, après un lavage à l'eau éventuel, on ajoute en agitant une base hydrosoluble, dont le sel sulfonique doit être préparé, et de l'eau, on sépare les phases qui se forment et on laisse le sel en solution aqueuse ou on l'en isole.

2. Procédé suivant la revendication 1, caractérisé en ce que l'acide est un acide inorganique ou de l'acide formique.

3. Procédé suivant les revendications 1 et 2, caractérisé en ce que le pH est ajusté à 3 (lire inférieur à 3).

4. Procédé suivant la revendication 1, caractérisé en ce que l'amine sub a) est une amine secondaire ou tertiaire.

5. Procédé suivant la revendication 1, caractérisé en ce que les bases sub d) sont des amines hydrosolubles.

6. Procédé suivant la revendication 1 et la revendication 5, caractérisé en ce que les amines hydrosolubles sont choisies parmi les alcanolamines.

7. Utilisation des composés préparés selon la revendication 1, éventuellement sous forme de solutions, pour teindre les matières textiles, le cuir ou les pâtes à papier.